# EUROPEAN PATENT APPLICATION

(11) **EP 2 413 513 A1**
(43) Date of publication of application: **01.02.2012**
(21) Application number: 09842158.9
(22) Date of filing: 27.03.2009
(51) Int. Cl.: H04B 7/005, H04J 1/00, H04J 11/00, H04J 13/04

(54) **WIRELESS COMMUNICATION METHOD, MOBILE STATION, BASE STATION, AND WIRELESS COMMUNICATION SYSTEM**

(71) Applicant: Fujitsu Limited, Kawasaki-shi, Kanagawa 211-8588 (JP)
(72) Inventor: NAKAMURA, Michiharu, Kawasaki-shi Kanagawa 211-8588 (JP)
(74) Representative: Holz, Ulrike
(86) International application number: PCT/JP2009/001401
(87) International publication number: WO 2010/109540

(57) **Abstract**

A wireless communication method between a first communication device such as a base station and a second communication device such as a mobile station having an interference canceling function is provided. The wireless communication method includes determining, with the second communication device, whether the second communication device undergoes an interference; transmitting, with the second communication device, a first notification signal to the first communication device; allocating, with the first communication device, a null signal within a predetermined frequency band for a predetermined transmission period in response to the first notification signal; and activating, with the second communication device, an interference canceling function in response to the allocated null signal.

## Description

### TECHNICAL FIELD

The embodiments of the present invention relate to a technique of data transmission in wireless communications.

### BACKGROUND ART

In wireless communications, a limited frequency band is efficiently used. As a mode of using an effective frequency band, there exists a so-called three-cell frequency reuse. In three-cell frequency reuse, a frequency band allocated to a system is divided into three sub bands, and the sub bands are allocated to cells so that a sub band used in one of the cells is not the same as the sub bands used in the cells adjacent to the one of the cells. Therefore, the cells using the same bands are separated in the three-cell frequency reuse, and interference among the same sub bands is prevented.

Even if a communication signal for wireless communication of another mobile station using the same frequency interferes a communication signal of a mobile station, the mobile station has interference canceling function of removing or suppressing the interference with the signal processing. Non Patent Document 1 discloses an interference canceling technique which uses directionality of an antenna. It is disclosed that the a transmission error rate can be improved. Non Patent Document 2 discloses an interference cancellation technique for processing a signal received from a single antenna.

Non Patent Document 1 discloses that an interference canceling function is realized with a relatively simple circuit if a signal component of zero (null signal) is included in a transmission signal. This is because the interference signal can be easily detected in the frequency or period of the null signal. This is also applicable to an interference canceling technique of processing a received signal from the single antenna. In a case of Orthogonal Frequency-Division Multiplexing (hereinafter, referred to as OFMD), a sub-carrier corresponding to the null signal is referred to as a null sub-carrier. A signal is not sent by the null sub-carrier.
[Non-Patent Document 1] S. Hara, S. Hane and Y. Jia, "A simple-steering adaptive array antenna in OFDM-based WPAN/WLAN," VTC-03 Spring, April 2003
[Non-Patent Document 2] Jeffrey G. Andrews Interference cancellation for cellular systems: A contemporary overview, IEEE Wireless Communications, vol. 12, no. 2, Apr 2005, pp. 19-29

However, when the transmission signal contains the null signal in the above interference canceling function, the data transmission efficiency is degraded. For example, if a null sub-carrier is constantly provided in the wireless communication in which data are transmitted by 48 sub-carriers using OFDM, since the sub-carrier does not substantially contribute the data transmission, a data transmission efficiency is degraded by about 2%. Said differently, execution of the interference canceling function opposes to the data transmission efficiency.

An object of the present invention is to restrict a decrement of data transmission efficiency in a wireless communication between a communication device such as a mobile station and other communication device.

### MEANS FOR SOLVING THE PROBLEM

According to an aspect of the embodiments, a wireless communication method between a first communication device and a second communication device having an interference canceling function for suppressing an interference component of a reception signal is provided. The wireless communication method includes determining whether a second communication device undergoes interference, transmitting a first notification signal to a first communication device if it is determined that the second communication device undergoes the interference, allocating with the first communication device a null signal to a predetermined transmission frequency band or to a predetermined transmission period in response to the first notification signal, and carrying out with a second communication device an interference canceling function in response to the allocating of the null signal.

According to the another aspect, there is provided a wireless communication system which includes the base station and the mobile station and carries out the same process as the above wireless communication method.

### EFFECT OF THE INVENTION

According to the embodiment of the present invention, it is possible to restrict a drop of data transmission efficiency in a wireless communication between a communication device such as a mobile station and another communication device.

### BRIEF EXPLANATION OF DRAWINGS

FIG. 1 illustrates a wireless communication system of Embodiment 1.
FIG. 2 illustrates allocation of null sub-carriers.
FIG. 3 is a flow chart of a wireless communication method between a base station (BS) and a mobile station (MS) in the wireless communication system of Embodiment 1.
FIG. 4 is a block chart illustrating an important portion of the inner structure of a base station of Embodiment 2.
FIG. 5 is a block chart illustrating an important portion of the inner structure of a base station of Embodiment 2.
FIG. 6 is a block chart illustrating an important portion of the inner structure of a base station of Embodiment 3.
FIG. 7 is a block chart illustrating an important portion of the inner structure of a mobile station of Embodiment 3.

### EXPLANATION OF REFERENCE SYMBOLS

Base station (BS)
11,70: control unit
12: channel coding unit
13: modulation unit,
14: sub-carrier mapping,
15: IFFT unit,
16,73: transmitter,
17,74: receiver,
18: FFT unit,
19: demodulation unit,
20: channel decoding unit,
21: signal separating unit,
71: multiplier,
72: diffusion processing unit,
75: back diffusion processing unit

Mobile station (MS)
51,80: control unit,
52: signal generating unit,
53: channel coding unit,
54: modulation unit,
55: sub-carrier mapping,
56: IFFT unit,
57,82: transmitter,
58a,58b: antenna,
59a,59b,83a,83b: receiver,
60a,60b: FFT unit,
61,85: weight controlling unit,
62,86: multiplier,
63,87: subtractor,
64: demodulation unit,
65: channel decoding unit,
66: signal separating unit,
67,90: RSSI measuring unit,
68,91: CINR measuring unit,
81: diffusion processing unit,
84a,84b: signal extracting unit,
88: back diffusion processing unit,
89: timing detecting unit

### BEST MODE FOR CARRYING OUT THE INVENTION

### (1) Embodiment 1

### (1-1) Wireless communication system

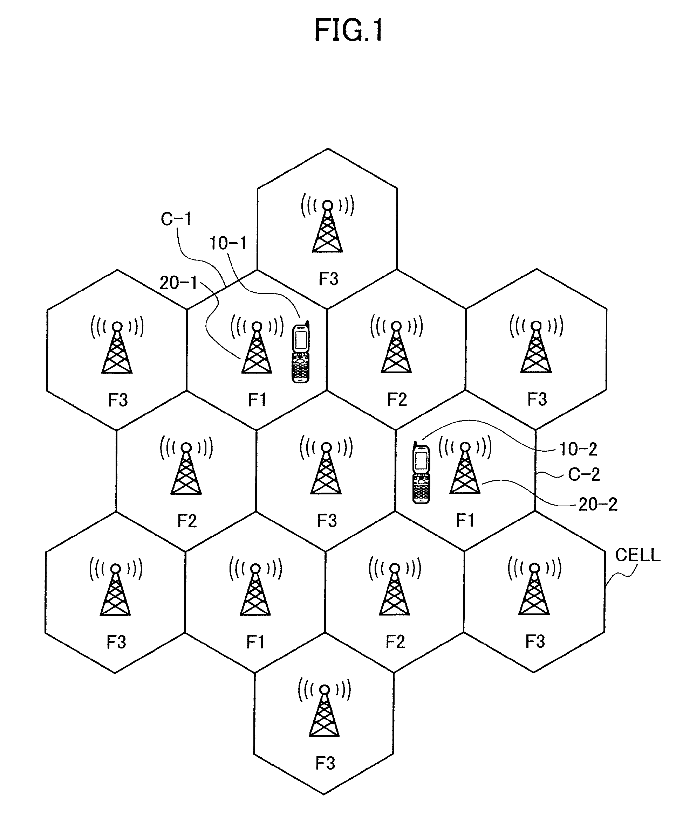

Hereinafter, Embodiment 1 of the present invention is described. FIG. 1 illustrates an example wireless communication system of Embodiment 1. FIG. 1 illustrates a wireless communication system to which so-called three-cell frequency reuse is applied. With the wireless communication system, a frequency band allocated to a system is divided into three sub bands F1, F2 and F3. The sub bands are allocated to the cells so that the sub bands used in the adjacent cells do not become the same. Each cell is a communication service area covered by the antenna of a base station.

Referring to FIG. 1, the sub band F1 is used in the cells C-1 and C-2 corresponding to the base stations 20-1 and 20-1. Meanwhile, the sub band F2 or F3 is used in the cells adjacent to the base station 20-1 and 20-2. With this, the cells using the sub band F1 are separated. In mobile stations 10-1 and 10-2 existing in the cells C-1 and C-2 respectively, the upper limit value of interference strength caused by a common sub band F1 is restricted.

In the wireless communication system illustrated in FIG. 1, the interference strength caused in the mobile station 10-1 and 10-2 varies depending on the position of the mobile station and a transmission environment between the base station and the mobile station. For example, if the mobile station 10-1 is close to the base station 20-1, it is possible to reduce transmission power from the base station 20-1 to the mobile station 10-1. Therefore, the interference strength received by the mobile station 10-2 is relatively small. Meanwhile, if the transmission environment between the base station 20-1 and the mobile station 10-2 is good, the interference strength received by the mobile station 10-2 is relatively large.

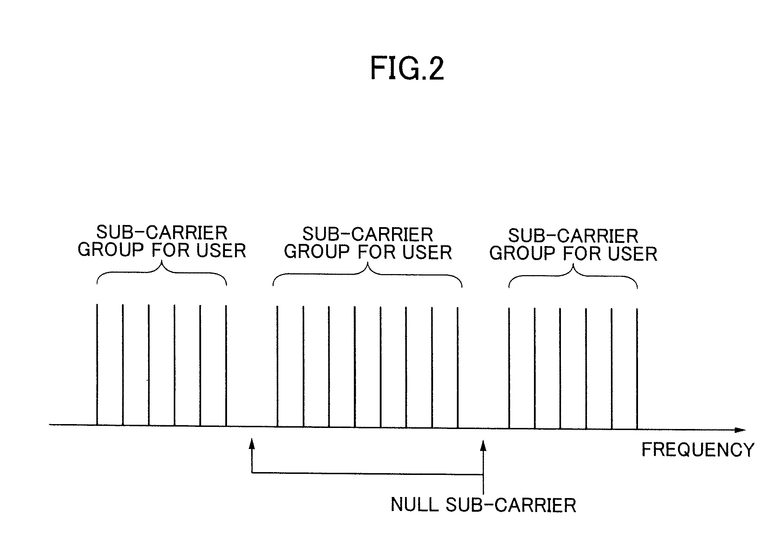

The mobile stations (second communication devices) have an interference canceling function (interference canceller) for removing or suppressing the interference. As an interference canceling function, the techniques disclosed in Non-Patent Documents 1 and 2 may be applicable. With this interference canceling function, a null signal is allocated to a predetermined transmission frequency band or transmission period of a transmission signal from the base station (first communication device) to the mobile station (second communication device). If the transmission signal is an OFDM signal, the allocation of the null signal to the transmission signal results in non-transmission of the signal on null sub-carriers corresponding to the null signals as illustrated in FIG. 2. In the mobile station having the interference canceling function, interference components are removed or suppressed on a premise that a transmission frequency band or transmission frequency band to which the null signal is allocated is the interference component.

In the wireless communication system, the base station does not constantly allocate the null signal to the transmission signal. The base station allocates the null signal to the transmission signal when the base station receives a first notification signal reporting that the mobile station undergoes the interference from the mobile station. Said differently, only when the mobile station requires the null signal by being allocated with the null signal which does not substantially contribute the data transmission, the data transmission efficiency is enhanced in the wireless communication system. When the mobile station is not interfered, it is preferable not to allocate the null signal to the transmission signal.

It may be determined whether the mobile station undergoes the interference based on a Received Signal Strength Indicator (RSSI) as a reception signal intensity and a Carrier-to-Interference-plus-Noise Ratio (CINR) as a power ratio. When the RSSI is greater than a predetermined first threshold value and the CINR is smaller than a predetermined second threshold value, the mobile station is determined to undergo the interference. The first and second threshold values can be appropriately set. By the determination as described above using not only the CINR and but also the RSSI, it is possible to determine whether a reason why the CINR is small is causer by domination of the interference or domination of the noise relative to a carrier in the reception signal. Even if the CINR is smaller than the second threshold value and the RSSI has the first threshold value or less, the noise is considered to be dominant. Then, it is not determined that the mobile station undergoes interference. It is possible to determine whether the mobile station undergoes the interference based on a Carrier-to-Interference Ratio (CIR) or Signal-to-Interference Ratio (SIR) instead of the CINR.

### (1-2) Wireless communication method

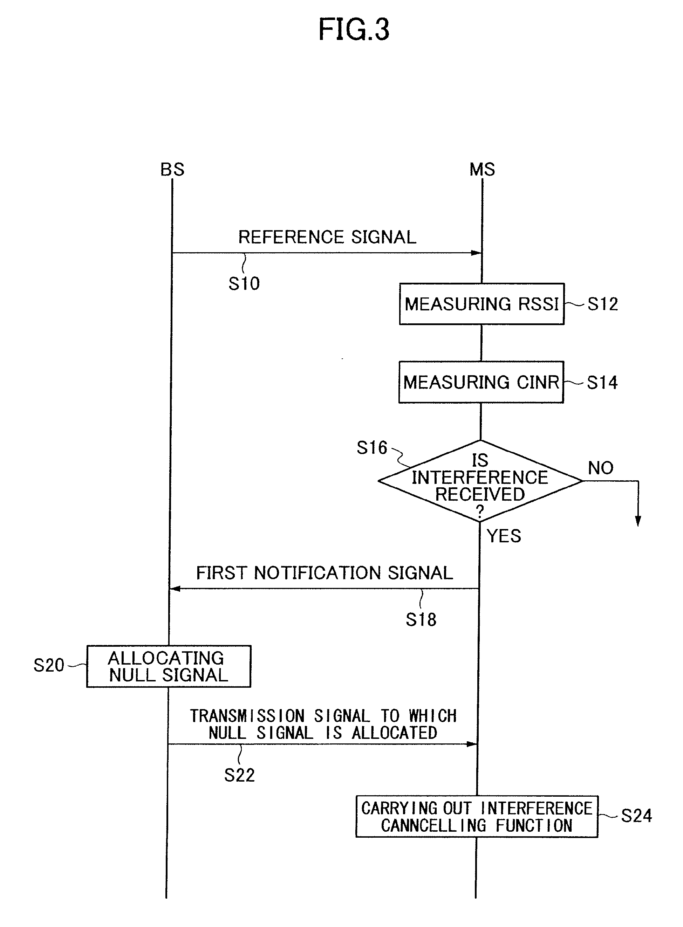

Referring to FIG. 3, a wireless communication method of Embodiment 1 is described. FIG. 3 is a flow chart of a wireless communication method between a base station (BS) and a mobile station (MS).

Referring to FIG. 3, a pilot signal or a reference signal such as a preamble signal is sent to the base station to the mobile station in step S10. The reference signal is know by both of the base station and the mobile station. The mobile station measures the RSSI and the CINR based on the reference signal in steps S12 and S14. The mobile station determines that the mobile station undergoes the interference under conditions that the measured RSSI is greater than the predetermined first threshold value and the measured CINR is smaller than the second threshold value in YES of step S16.

If it is determined that the mobile station does not undergo the interference in NO of step S16, a further process is not determined. Meanwhile, if it is determined that the mobile station undergoes the interference in YES of step S16, the first notification signal is transmitted in step S18. The first notification signal is allocated to an upstream control signal and transmitted.

In the base station, the first notification signal is received and the null signal is allocated to the predetermined transmission frequency band or the predetermined transmission period in step S20. A method of allocating the null signal conforms to a wireless communication method applied to the wireless communication system of Embodiment 1. For example, when the OFDM is applied, the null sub-carrier corresponding to the null signal is set up. In step S22, the transmission signal to which the null signal is allocated is transmitted to the mobile station. Finally, an interference canceling function is carried out in step S24 based on the transmission signal to which the null signal is allocated.

Concerning the wireless communication method illustrated in FIG. 3, there is disclosed a wireless communication method between the base station (the first communication device) and the mobile station (the second communication device) having an interference canceling function of suppressing the interference component of the reception signal.

The wireless communication method is carried out between the base station (the first communication device) and the mobile station (the second communication device) having an interference canceling function of suppressing the interference component of the reception signal. The wireless communication method includes determining, with the mobile device, whether the mobile station undergoes the interference, transmitting, with the mobile device, the first notification signal to the base station if it is determined that the mobile station undergoes the interference, allocating, with the base station, the null signal to the predetermined transmission frequency band or the predetermined transmission period in response to the first notification signal, and carrying out, with the mobile device, the interference canceling function in response to the allocating the null signal.

As described, with the wireless communication system and wireless communication method of Embodiment 2, the mobile station receives the transmission signal to which the null signal is allocated from the base station and carries out the interference canceling function. Therefore, the base station needs not to allocate the null signal to the transmission signal even if a degree of the interference in the mobile station is low. Said differently, the base station starts to allocate the null signal to the transmission signal and transmit the transmission signal to which the null signal is allocated. In comparison with a case where the null signal is constantly allocated to the transmission signal, downstream data transmission efficiency is especially improved.

### (2) Embodiment 2

Next, Embodiment 2 of the present invention is described. With Embodiment 2, the wireless communication method of Embodiment 1 is applied to a wireless communication system employing an orthogonal frequency division multiplexing (OFDM) communication method.

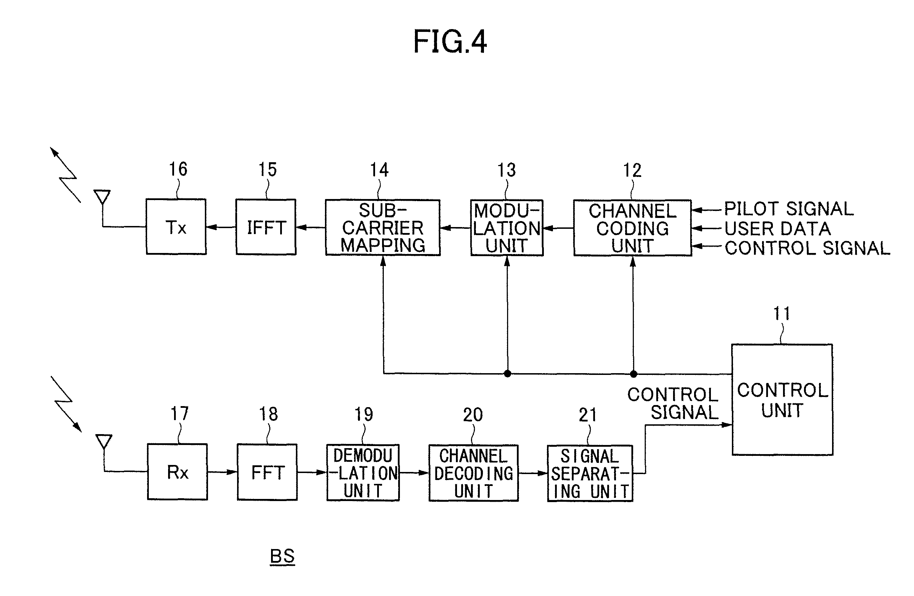

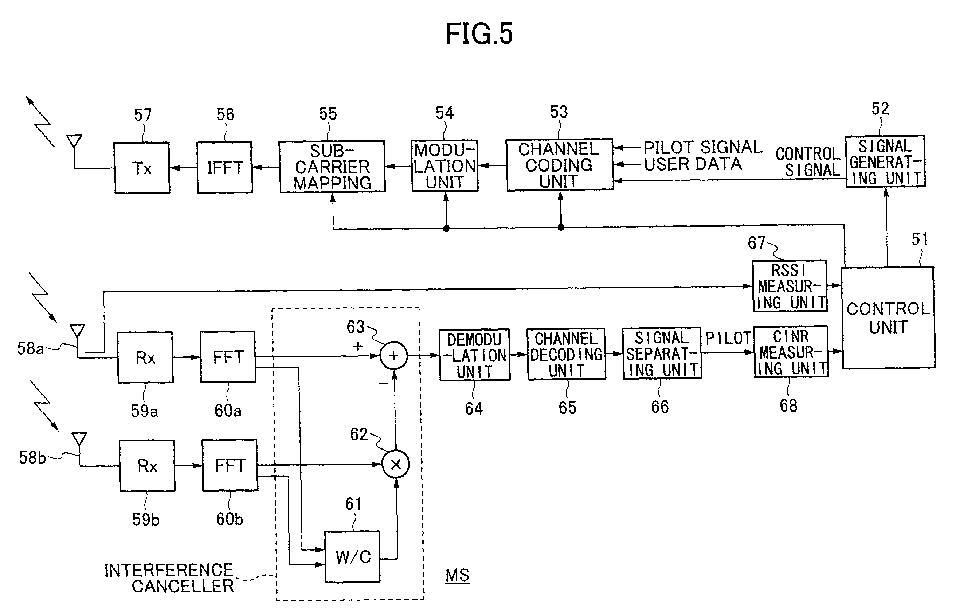

Referring to FIG. 4 and FIG. 5, the structures of a base station and a mobile station of the wireless communication system are described. FIG. 4 is a block chart illustrating an important portion of the inner structure of the base station (BS) of Embodiment 2. FIG. 5 is a block chart illustrating an important portion of the inner structure of the mobile station (MS) of Embodiment 2. In the OFDM communication method, a null signal is allocated to a predetermined transmission frequency band (a null sub-carrier).

### (2-1) Structure of base station

As illustrated in FIG. 4, the base station includes a control unit 11, a channel coding unit 12, a modulation unit 13, a sub-carrier mapping unit 14, an IFFT unit 15, a transmitter (Tx) 16, a receiver (Rx) 17, a FFT unit 18, a demodulation unit 19, a channel decoding unit 20 and a signal separating unit 21.

The channel coding unit 12 multiplexes a known pilot signal (a reference signal), user data, and a control signal and carries out error correction encoding, interleave process or the like to communicate with the mobile station.

The modulation unit 13 carries out a bit repetition process for data coded by the channel coding unit12, insertion process of a pilot signal and a preamble signal, and a predetermined modulation process. For example, the modulation of the user data is carried out using a predetermined modulation method in higher modulation order such as quadri-phase shift keying (QPSK) modulation, 16QAM modulation and 64QAM modulation. The modulation for control information requiring high quality transmission is carried out using BPSK modulation or QPSK modulation in a low encoding rate.

The sub-carrier mapping unit 14 allocates the modulated pilot signal, the user data and the control signal to two-dimensional communication resource in directions of frequency (sub-carriers) and a time (OFDM symbols) under a control of the control unit 11. The sub-carrier mapping unit 14 makes a predetermined sub-carrier be a null sub-carrier. If the sub-carrier mapping unit 14 sets up the null sub-carrier with a command from the control unit 11, the sub-carrier mapping unit 14 allocates the pilot signal, the user data and the control signal to sub-carriers other than the null sub-carrier. If the null sub-carrier is not set up, the sub-carrier mapping unit 14 allocates the pilot signal, the user data and the control signal to all sub-carriers.

The Inverse Fast Fourier Transform (IFFT) unit 15 carries out inverse fast Fourier transformation for the outputs of the sub-carriers from the sub-carrier mapping unit 14 to obtain an time axis waveform and outputs the result to the transmitter (Tx) 16.

The transmitter 16 includes a Digital to Analog (D/A) converter, a local frequency oscillator, a mixer, a power amplifier, a filter or the like. The transmitter 16 converts the transmission data from the IFFT unit 15 from a baseband frequency to a wireless frequency and emits the converted transmission data to the air (space).

The receiver 17 includes a band-limiting filter, a Low Noise Amplifier (LNA), a local frequency oscillator, a local frequency oscillator, an orthogonal demodulator, an Automatic Gain Control (AGC) amplifier, and an Analog to Digital (A/D) converter to thereby convert the received RF signal to a digital baseband signal. The FFT unit 18 carries out a FFT process by sampling input digital data. With this, encoded symbol arrays for sub-carriers are obtainable.

The demodulation unit 19 carries out a demodulation process and generates an encoded symbol array. The channel decoding unit 20 carries out a decode process corresponding to an error correction encoding process provided in the mobile station, a de-interleave process or the like for the encoded symbol array and extracts a received data array. The signal separating unit 21 extracts the control signal from received data array received from the channel decoding unit 20 and outputs the control signal to the control unit 11.

The control unit 11 controls a transmitting operation inside the base station based on the control signal from the signal separating unit 21. For example, the control unit 11 selects any one of plural modulation encoding methods in response to a CINR report included in the control signal and described a downlink from the base station to the mobile station so as to optimize transmission efficiency. The control unit 11 controls the modulation unit 13 so that the communication to the mobile station is done with the selected modulation encoding method.

The control unit 11 controls the sub-carrier mapping unit 14 so as to set up the null sub-carrier in a case where the control signal from the signal separating unit 21 includes the first notification signal for notifying that the mobile station is interfered.

### (2-2) Structure of mobile station

Referring to FIG. 5, the mobile station (MS) includes a control unit 51, a signal generating unit 52, a channel coding unit 53, a modulation unit 54, a sub-carrier mapping unit 55, an IFFT unit 56, a transmitter (Tx) 57, antennas 58a, 58b, a receiver (Rx) 59a, 59b, a FFT unit 60a, 60b, a weight controlling unit (Weight Controller (WC)) 61, a multiplier 62, a subtractor 63, a demodulation unit 64, a channel decoding unit 65, a signal separating unit 66, a measuring unit 67 (s first measuring unit), a CINR measuring unit 68 (second measuring unit). In the mobile station, there are two antennas 58a and 58b. Only the antenna 58a is a suitable antenna for forming a directional beam corresponding to a desirable wave (RF signal).

The channel coding unit 53 multiplexes a known pilot signal (a reference signal), user data, and a control signal from the signal generating unit and carries out error correction encoding, interleave process or the like to communicate with the base station.

The modulation unit 54 carries out a bit repetition process for data encoded by the channel coding unit 12, insertion process of a pilot signal and a preamble signal, and a predetermined modulation process. For example, the modulation of the user data is carried out using a predetermined modulation method in higher modulation order such as quadri-phase shift keying (QPSK) modulation, 16QAM modulation and 64QAM modulation. The modulation for control information requiring high quality transmission is carried out using BPSK modulation or QPSK modulation in a low encoding rate.

The sub-carrier mapping unit 55 allocates the modulated pilot signal, the user data and the control signal to a two-dimensional communication resource in directions of frequency (sub-carriers) and a time (OFDM symbols) under a control of the control unit 51.

The Inverse Fast Fourier Transform (IFFT) unit 56 carries out inverse fast Fourier transformation for the outputs of the sub-carriers from the sub-carrier mapping unit 55 to obtain a time axis waveform, and outputs the result to the transmitter (Tx) 57.

The transmitter 57 includes a Digital to Analog (D/A) converter, a local frequency oscillator, a mixer, a power amplifier, a filter or the like. The transmitter 57 converts the transmission data from the IFFT unit 56 from a baseband frequency to a wireless frequency and emits the converted transmission data to the air (space).

The receivers 59a and 59b include a band-limiting filter, a low noise amplifier, a local frequency oscillator, an orthogonal demodulator, an ACG amplifier and an A/D converter. The receivers 59a and 59b convert RF signals received by the antenna 58a and 58b to digital baseband signals. The FFT units 60a, 60b carry out FFT processes by sampling input digital data. With this, encoded symbol arrays for sub-carriers are obtainable.

The weight controlling unit 61, the multiplier 62 and the subtractor 63 form an interference canceller (interference canceling function) to remove or suppress interference components in reception signals received by the receiver 59a. It is unnecessary to constantly operate the interference canceller. The interference canceller may be operated only in a case where the null sub-carrier is allocated to the transmission signal received from the base station.

The interference canceller may be used in a case where a delay time difference between delayed multipaths is sufficiently smaller than an inverse number of a sub-carrier gap of OFMD. Said differently, propagation characteristics of the signals do not greatly change for the sub-carriers. In this case, an existence rate between an interference wave received by the antenna 58a and an interference wave received by the antenna 58b may be a constant predetermined rate, irrespective of the sub-carriers.

The signal component of the null sub-carrier (interference component) in the reception signal received by the antenna 58a is referred to as Sil, and the signal component of the null sub-carrier (interference component) in the reception signal received by the antenna 58b is referred to as Si2. A ratio (Sil/Si2) between Sil and Si2 is calculated by the weight controlling unit 61 as a weight. The weights may be the same for all the sub-carriers.

The above process is carried out for the reception signals corresponding to all the sub-carriers. The multiplier 62 multiplies the output (weight) of the weight controlling unit 61 by the reception signal caused by the interference wave from the antenna 58b and the receiver 59b. With this, the interference component caused by the interference wave in the reception signal from the antenna and the receiver 59a is obtainable. The interference component is subtracted from the reception signal of the receiver 59a by the subtractor 63. As a result, signals of sub-carriers which are obtained by removing or suppressing the interference components in the reception signals of the desired wave.

The interference canceller is only an example. Various interference cancellers are applicable in Embodiment 2.

The modulation unit 64 carries out a demodulating process for the output from the subtractor 63 to generate an encoded symbol array. The channel decoding unit 65 carries out a decode process corresponding to an error correction encoding process provided in the base station, a de-interleave process or the like for the encoded symbol array, and extracts a received data array. The signal separating unit 66 extracts a pilot signal from the received data array received from the channel decoding unit 65 and outputs the pilot signal to the CINR measuring unit 68.

The RSSI measuring unit 67 measures RSSI as reception signal intensity based on a signal from a directional coupler (not illustrated) which is provided in an input end of the reception signal from the antenna 58a. The measuring unit 68 measures CINR for the sub-carriers based on the pilot signal obtained from the signal separating unit 66. The measurement results of the RSSI measuring unit 67 and the CINR measuring unit 68 are output to the control unit 51.

The control unit 51 controls a transmitting operation the mobile station based on the measurement results (RSSI and CINR) of the RSSI measuring unit 67 and the CINR measuring unit 68. The control unit 51 determines whether the mobile station undergoes the interference, based on the condition that the RSSI is greater than a predetermined first threshold value and the CINR is smaller than a predetermined second threshold. If the control unit 51 determines that the mobile station undergoes the interference, the control unit controls the signal generating unit 52 so that the control signal for the base station includes the first notification signal notifying the receipt of the interference.

Further, the control unit 51 activates the interference canceller if the null sub-carrier is set up for the reception signal in response to the first notification signal. In the wireless communication system, information of whether the null sub-carrier is set up in the transmission signal may be included in the control information from the base station. The control unit 51 may activate the interference canceller upon receipt of the information.

As described, in the wireless communication system using the OFMD communication method, if it is determined that the mobile station undergoes the interference, the first notification signal notifying that the mobile station undergoes the interference is transmitted to the base station. When the base station receives the first notification signal, the base station sets up the null sub-carrier. Said differently, the null signal is allocated to a predetermined transmission frequency band in the base station of Embodiment 2. Preferably, only when the base station receives the first notification signal, the base station sets up the null sub-carrier.

### (3) Embodiment 3

Next, Embodiment 3 of the present invention is described. With Embodiment 3, the wireless communication method of Embodiment 1 is applied to a wireless communication system employing a code division multiplexing (CDM) communication method.

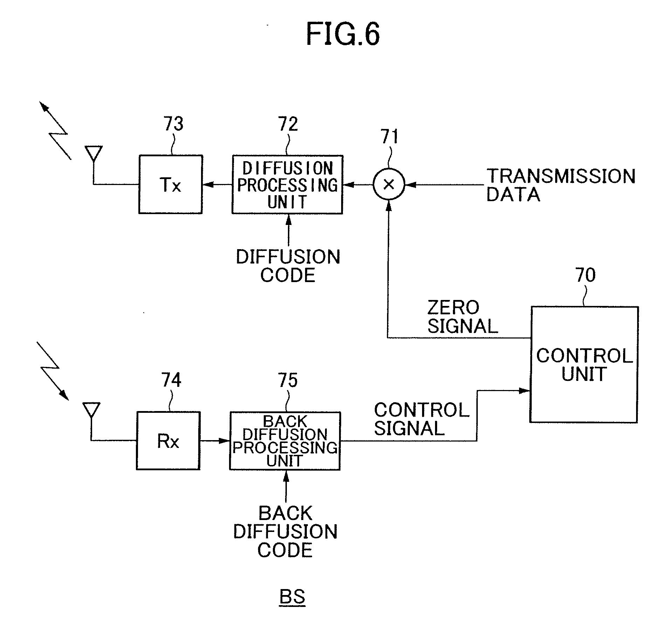

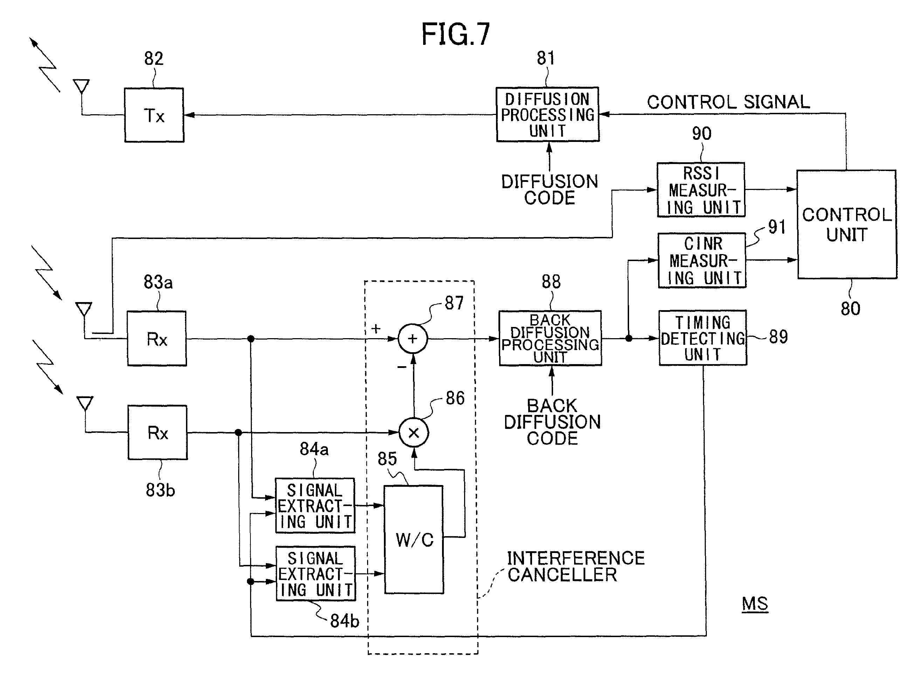

Referring to FIG. 6 and FIG. 7, the structures of a base station and a mobile station of the wireless communication system are described. FIG. 6 is a block chart illustrating an important portion of the inner structure of the base station (BS) of Embodiment 3. FIG. 7 is a block chart illustrating an important portion of the inner structure of the mobile station (MS) of Embodiment 3. A null signal (a zero signal) is allocated to a predetermined transmission period in the CDM communication method. In the following description, FIG. 4 and FIG. 5 are referred to for explaining the same constitutional elements as those of Embodiment 2.

### (3-1) Structure of base station

Referring to FIG. 6, the base station (BS) includes a control unit 70, a multiplier 71, a diffusion processing unit 72, a transmitter (Tx) 73, a receiver (Rx) 74, and a back diffusion processing unit 75. Referring to FIG. 6, the transmitter 73 and the received 74 may employ the same structures as those of the transmitter 16 and the receiver 17.

The back diffusion processing unit 75 extracts a control signal by using a back diffusion code generated by the base station for the control signal from a reception signal (a digital baseband signal which undergoes spectral diffusion) received from the receiver 74 and extracts the control signal. The control signal is output to the control unit 70.

The control unit 70 controls a transmitting operation inside the base station based on the control signal received from the back diffusion processing unit 75. If the control signal received from the back diffusion processing unit includes a first notification signal for notifying that the mobile station undergoes the interference, the control unit 70 gives a zero signal (a null signal) to the multiplier 71 during a predetermined transmission period. With this, the output from the multiplier 71 becomes a zero signal. The diffusion processing unit 72 carries out a diffusion process received from the multiplier 71 using diffusion codes provided for respective users. In the transmission data illustrated in FIG. 6 include a predetermined reference signal which is known by the base station (BS) and the mobile station (MS).

### (3-2) Structure of mobile station

Referring to FIG. 7, the mobile station (MS) includes a control unit 80, a diffusion processing unit 81, a transmitter (Tx) 82, a receiver (Rx) 83a,83b, a signal extracting unit 84a, 84b, a weight controlling unit (W/C:Weight Controller) 85, a multiplier 86, a subtractor 87, a back diffusion processing unit 88, a timing detecting unit 89, a RSSI measuring unit 90 (a first measuring unit) and a CINR measuring unit 91 (a second measuring unit). Referring to FIG. 7, the transmitter (Tx) 82 and the receivers (Rx) 83a, 83b employ the same structure as those of the transmitter 57 and the receivers 59a, 59b illustrated in FIG. 5. Further, the receive antenna may have the same structure as those of the antennas 58a, 58b.

The weight controlling unit 85, the multiplier 86 and the subtractor 87 form an interference canceller (interference canceling function) to remove or suppress interference components in reception signals received by the receiver 83a in a similar manner to the weight controlling unit 61, the multiplier 62 and the subtractor 63.

The signal extracting units 84a and 84b extract the reception signal from the receivers 83a and 83b for a term designated by the timing detecting unit 89. The timing detecting unit 89 detects the term (a timing) of the zero signal. The indicated signal indicative of the term is sent to the signal extracting units 84a and 84b. Therefore, the output signals from the signal extracting units 84a and 84b include only interference components of the reception signal. The operation of the interference canceller is the same as that of Embodiment 2. The reception signal from which the interference component is removed or in which the interference component is suppressed is output from the subtractor 87.

The back diffusion processing unit 88 extracts a reference signal from the output signal (the signal obtained by removing the interference component from the reception signal or by suppressing the interference component the reception signal) of the subtractor 87 by using a back diffusion code corresponding to a reference signal generated in the base station.

The timing detecting unit 89 detects the term when the output signal from the back diffusion processing unit 88 is the zero signal and transmits an indication signal indicative of the term to the signal extracting units 84a and 84b. Referring to FIG. 7, a process of the timing detecting unit 89 is provided after a process of the back diffusion processing unit 88. However, if the zero signal can be otherwise detected, the order of the processes are not limited to the above. The timing detecting unit 89 may be provided in an input or output side of the receiver 83a.

The RSSI measuring unit 90 and the CINR measuring unit 91 measures the RSSI and the CINR, respectively, in a similar manner to the RSSI measuring unit 67 and the CINR measuring unit 68. The CINR measuring unit 91 measures the CINR based on the reference signal obtained in the back diffusion processing unit 88.

The control unit 80 controls a transmitting operation the mobile station based on the measurement results (RSSI and CINR) of the RSSI measuring unit 90 and the CINR measuring unit 91. The control unit 80 determines that the mobile station undergoes the interference on the condition that the RSSI is greater than a predetermined first threshold value and the CINR is smaller than a predetermined second threshold. If the control unit 80 determines that the mobile station undergoes the interference, the control unit 80 generates the control signal so that the control signal includes the first notification signal for notifying that the mobile station undergoes the interference.

Further, the control unit 80 activates an interference canceller if the control unit 80 detects that the zero signal is set in the reception signal in response to the first notification signal.

As described, in the wireless communication system using the CDM communication method, if it is determined that the mobile station undergoes the interference, the first notification signal notifying that the mobile station undergoes the interference, is transmitted to the base station. If the base station receives the first notification signal, the zero signal (the null signal) is allocated to the predetermined transmission period. Said differently, the null signal is allocated to the predetermined transmission period in the base station of Embodiment 3. Preferably, only if the base station receives the first notification signal, the zero signal (the null signal) is allocated to the predetermined transmission period.

### (4) Modified Example

Modified examples of Embodiments 1-3 are described.

### (4-1) Modified Example 1

In Embodiments 1-3, a predetermined channel having data of several bits is provided. The mobile station may transmit the first notification signal for notifying the base station an event that the mobile station undergoes the influence using the predetermined channel. At this time, the first notification signal to be transmitted may include the same data as measurement results of the RSSI, the CINR, or the RSSI and the CINR. For example, the data include 6 bits, where 32 values from 0b000000 to 0b011111 may be used as the CINR measurement result and 32 values from 0b100000 to 0b111111 may be used as the control signal. Then, the first notification signal may be contained in the control signal.

### (4-2) Modified Example 2

In a wireless communication system in which many mobile stations communicate with the other mobile stations, the mobile station which is not communicating may request the base station to allocate a communication resource. For this, a Random Access Channel (RAC) is set as a common channel on an upstream side. The mobile station may transmits the first notification signal for notifying the base station an event that the mobile station undergoes the influence using the Random Access Channel (RAC). In this case, a specific code corresponding to the first notification signal is previously determined between the base station and the mobile station. The base station allocates the null signal when the specific code corresponding to the first notification signal through the Random Access Channel (RAC).

According to Modified Example 2, if the mobile station which is not communicating starts to communicate, the mobile station can activate an interference canceling function from the beginning of the communication while the interference is caused between the mobile station and the other mobile station.

### (4-3) Modified Example 3

In Embodiments 1-3, the null signal may be substantially allocated by changing an encoding ratio of the transmission data in the base station.

For example, if the zero signal is not set up, data of 24 bits is subjected to encoding with a predetermined encoding ratio (0.5) to change to data of 48 bits and the changed data are transmitted. In this case, when the zero signal is set, several bits in the 48 bits is forcibly set as the zero signal (bit 0) When the one bit is forcibly set as the zero signal (bit 0), data of 24 bits are encoded with an encoding ratio (0.51) to obtain encoding data of 47 bits. Then, transmission data to the mobile station becomes 48 bits. In the mobile station, the data of 48 bits are decoded regardless of the set-up of the zero signal.

With Embodiment 3, it is unnecessary to provide a transmission period of zero signal in order to change the encoding ratio of the transmission data in response to the existence or non-existence of the zero signal in the transmission data. On the side of the mobile station, the forcibly inserted zero signal may be handled as an erasure bit, and a specific process is not required.

## Claims

1. A wireless communication method between a first communication device and a second communication device having an interference canceling function of suppressing an interference component of a reception signal, the wireless communication method comprising:
determining, with the second communication device, whether the second communication device undergoes an interference;
transmitting, with the second communication device, a first notification signal to the first communication device;
allocating, with the first communication device, a null signal within a predetermined frequency band for a predetermined transmission period in response to the first notification signal; and
activating, with the second communication device, an interference canceling function in response to the allocated null signal.

2. The wireless communication method according to claim 1,
wherein the determining, with the second communication device, whether the second communication device undergoes the interference includes:
measuring reception signal strength and a signal-to-interference ratio based on a reference signal from the first communication device; and
determining that the second communication device undergoes the interference if the reception signal strength is larger than a first threshold value and the signal-to-interference ratio is smaller than a second threshold value.

3. The wireless communication method according to claim 1,
wherein, in the allocating, if the first communication device and the second communication device communicate with each other using plural sub-carriers in orthogonal frequency division multiplexing, the null signal is allocated to at least one sub-carrier among the plural sub-carriers.

4. The wireless communication method according to claim 1,
wherein, in the allocating, if the first communication device and the second communication device communicate with each other using plural sub-carriers in code division multiplexing, the null signal is allocated to at least one sub-carrier among the plural sub-carriers.

5. The wireless communication method according to claim 1,
wherein, in the transmitting, the second communication device transmits the first notification signal to the first communication device through a random access channel.

6. A mobile station communicating with a base station using wireless communication, the mobile station comprising:
a first measuring unit configured to measure reception signal strength based on a reference signal from the base station;
a second measuring unit configured to measure a signal-to-interference ratio based on the reference signal;
a transmission unit configured to transmit a first notification signal which requests the base station for an allocation of a null signal if reception signal strength is larger than a first threshold value and a signal-to-interference signal is smaller than a second threshold value; and
an interference canceller configured to be activated in response to the allocation of the null signal from the base station and suppress an interference component of the reception signal.

7. The mobile station according to claim 6,
wherein, if the base station and the mobile station communicate with each other using plural sub-carriers in orthogonal frequency division multiplexing, the null signal is allocated to at least one sub-carrier among the plural sub-carriers.

8. The mobile station according to claim 6,
wherein, if the base station and the mobile station communicate with each other using plural sub-carriers in code division multiplexing, the null signal is allocated to at least one sub-carrier among the plural sub-carriers.

9. The mobile station according to claim 6,
wherein, the mobile station transmits the first notification signal to the base station through a random access channel.

10. A base station communicating with a mobile station using wireless communication, the mobile station comprising:
a first transmission unit configured to transmit a reference signal to the mobile station;
a receiving unit configured to receive a first notification signal which requests the base station for an allocation of a null signal from the mobile station; and
a second transmission unit configured to allocate the null signal to the mobile station within a predetermined frequency band for a predetermined transmission period in response to a receipt of the first notification signal.

11. The base station according to claim 10,
wherein, if the base station and the mobile station communicate with each other using plural sub-carriers in orthogonal frequency division multiplexing, the null signal is allocated to at least one sub-carrier among the plural sub-carriers.

12. The base station according to claim 10,
wherein, if the base station and the mobile station communicate with each other using plural sub-carriers in code division multiplexing, the null signal is allocated to at least one sub-carrier among the plural sub-carriers.

13. The base station according to claim 10,
wherein, the base station receives the first notification signal from the mobile station through a random access channel.

14. A wireless communication system including a base station and a mobile station,
wherein the base station comprises:
a first transmission unit configured to transmit a reference signal to the mobile station;
a receiving unit configured to receive a first notification signal which requests the base station for an allocation of a null signal from the mobile station; and
a second transmission unit configured to allocate the null signal to the mobile station within a predetermined frequency band for a predetermined transmission period in response to a receipt of the first notification signal.
wherein the mobile station comprises:
a first measuring unit configured to measure reception signal strength based on the reference signal from the base station;
a second measuring unit configured to measure a signal-to-interference ratio based on the reference signal;
a transmission unit configured to transmit the first notification signal which requests the base station for an allocation of the null signal if the reception signal strength is larger than a first threshold value and the signal-to-interference signal is smaller than a second threshold value; and
an interference canceller configured to be activated in response to the allocation of the null signal from the base station and suppress an interference component of the reception signal.
